# EUROPÄISCHE PATENTSCHRIFT

(11) **EP 3 322 550 B1**
(45) Veröffentlichungstag und Bekanntmachung des Hinweises auf die Patenterteilung: **18.12.2019**
(21) Anmeldenummer: 16738168.0
(22) Anmeldetag: 12.07.2016
(51) Int. Cl.: B23B 31/02, B23B 31/117, B23Q 11/10

(54) **WERKZEUGHALTER**
TOOL HOLDER
PORTE-OUTIL

(30) Priorität: 15.07.2015 DE 102015213316
(43) Veröffentlichungstag der Anmeldung: 23.05.2018
(73) Patentinhaber: Helmut Diebold GmbH&Co. Goldring-Werkzeugfabrik, 72417 Jungingen (DE)
(72) Erfinder: DIEBOLD, Hermann, 72379 Hechingen (DE)
(74) Vertreter: Pfiz, Thomas
(86) Internationale Anmeldenummer: PCT/EP2016/066518
(87) Internationale Veröffentlichungsnummer: WO 2017/009328

(56) Entgegenhaltungen:
- WO-A1-2013/127606
- DE-A1-102008 044 996
- US-A- 5 358 360

## Beschreibung

Die Erfindung betrifft eine Werkzeughalter mit einem um eine Drehachse rotierend antreibbaren Schrumpffutter, das einen zum Schrumpfspannen eines Werkzeugschafts eines Rotationswerkzeugs ausgebildeten, über eine vordere Stirnöffnung zugänglichen hohlen Futterkörper umfasst, einer durch den Futterkörper hindurch verlaufenden Kühlschmierstoffzuführung, die zum Durchleiten von unter Druck stehendem Kühlschmierstoff eingerichtet ist, und einem am vorderen Abschnitt des Futterkörpers angebrachten Düsenkopf, der als einstückiges Bauteil ausgebildet ist und mit der Kühlschmierstoffzuführung kommunizierende, radial allseitig begrenzte Düsenbohrungen zum Beaufschlagen des Rotationswerkzeugs mit Kühlschmierstoff aufweist.

Dokument DE 10 2008 044 996 A offenbart einen Werkzeughalter mit einem um eine Drehachse rotierend antreibbaren Schrumpffutter, das einen zum Schrumpfspannen eines Werkzeugschafts eines Rotationswerkzeugs ausgebildeten, über eine vordere Stirnöffnung zugänglichen hohlen Futterkörper umfasst, einer durch den Futterkörper hindurch verlaufenden Kühlschmierstoffzuführung, die zum Durchleiten von unter Druck stehendem Kühlschmierstoff eingerichtet ist, und einem am vorderen Abschnitt des Futterkörpers angebrachten Düsenkopf, der als einstückiges Bauteil ausgebildet ist, wobei der Futterkörper einen die Stirnöffnung umschließenden, mit einem Außengewinde versehenen Gewindezapfen und eine von dem Futtermantel zu dem Gewindezapfen hin abfallende Futterschulter aufweist, und wobei der Düsenkopf einen über ein Innengewinde auf den Gewindezapfen aufschraubbaren Hülsenabschnitt und einen, eine Durchstecköffnung für den Werkzeugschaft begrenzenden Ringabschnitt aufweist.

In der DE 10 2014 200 582.5 der Anmelderin ist ein ähnlicher Werkzeughalter beschrieben, bei dem ein Düsenring in einer die Stirnöffnung stufenörmig erweiternden inneren Ringaussparung des Spannfutters aufgenommen ist, wobei der Düsenring über Verbindungsmittel in der Ringaussparung fixiert ist. Aufgrund der Ringaussparung ergeben sich konstruktive Einschränkungen, insbesondere hinsichtlich der Stabilität und Haltekraft für die Halterung des Werkzeugschafts.

Ausgehend hiervon liegt der Erfindung die Aufgabe zugrunde, die bekannten Werkzeughalter weiter zu verbessern und mit möglichst einfachen Mitteln zu gewährleisten, dass bei einfacher Herstellbarkeit ein zuverlässiger Einsatz für eine gezielte Kühlschmierstoffeindüsung bei Schrumpffuttern auch bei standardisierten Außenmaßen sichergestellt ist.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, einen Düsenkopf auf eine äußere Ringstufe des Schrumpffutters aufzuschrauben. Dementsprechend wird erfindungsgemäß vorgeschlagen, dass der Futterkörper einen die Stirnöffnung umschließenden, mit einem Außengewinde versehenen Gewindezapfen und eine von dem Futtermantel zu dem Gewindezapfen hin abfallende Futterschulter aufweist, und dass der Düsenkopf einen über ein Innengewinde auf den Gewindezapfen aufschraubbaren Hülsenabschnitt und einen mit den Düsenbohrungen versehenen, eine Durchstecköffnung für den Werkzeugschaft begrenzenden Ringabschnitt aufweist, wobei der Ringabschnitt zumindest die innere und äußere Stirnkante des Gewindezapfens gegen Durchtritt von Kühlschmierstoff umlaufend abdichtet. Auf diese Weise wird ein Freiraum für den Hülsenabschnitt geschaffen, ohne den Spannabschnitt des Futters zu beeinträchtigen, während der Ringabschnitt vor dem Futter vorgelagert bleibt und aufgrund der radial beabstandeten und schräg angestellten Düsen auch bei Einwirkung von Zentrifugalkräften gezielt Kühlfluid in den Arbeitsbereich des Werkzeugs eindüst.

Vorteilhafterweise schlägt beim Anschrauben des Hülsenabschnitts der Ringabschnitt stirnseitig gegen den Gewindezapfen an, so dass eine feste und dichte Flächenverbindung geschaffen wird, die sich beispielsweise zu Reparaturzwecken auch wieder lösen lässt.

Um den Kühlschmierstoff auch unter hohem Druck verlustfrei in die Düsenbohrungen einzuleiten, ist es vorteilhaft, wenn der Ringabschnitt eine gegen die freie Stirnseite des Gewindezapfens anliegende hintere Dichtfläche aufweist.

Für eine Minimalmengenschmierung ist es von Vorteil, wenn der Ringabschnitt eine hintere Planfläche aufweist, die von den Einlassöffnungen der Düsenbohrungen durchbrochen ist, so dass eine direkte Fluidüberleitung ohne Totraumbereiche möglich ist.

Für den Transfer des Kühlschmierstoffs ist es auch günstig, wenn die Kühlschmierstoffzuführung mehrere durch den Gewindezapfen hindurch verlaufende, in dessen Umfangsrichtung verteilte Speisebohrungen aufweist, die jeweils im Bereich einer Einlassöffnungen einer Düsenbohrung münden.

Für eine Durchleitung von größeren Fluidmengen ist es vorteilhaft, wenn der Ringabschnitt eine nach hinten offene ringförmige Verteilerausnehmung für Kühlschmierstoff aufweist, wobei die Einlassöffnungen der Düsenbohrungen am Boden der Verteilerausnehmung liegen. Auf diese Weise kann eine Verteilung auch auf eine größere Anzahl von Düsenbohrungen günstig erreicht werden.

In diese Zusammenhang ist es auch von Vorteil, wenn die Kühlschmierstoffzuführung mehrere durch den Gewindezapfen hindurch verlaufende, in dessen Umfangsrichtung verteilte Speisebohrungen aufweist, die im Bereich der Verteilerausnehmung münden.

Im Hinblick auf die Vermeidung von Störkonturen und von Verschmutzungen ist es vorteilhaft, wenn die Mantelfläche des Hülsenabschnitts flächenbündig an den vorzugsweise konisch verjüngtem Futtermantel anschließt.

Eine weitere vorteilhafte Ausführung sieht vor, dass der Hülsenabschnitt über einen im Vergleich zur Gewindelänge seines Innengewindes schmalen Ringspalt von der Futterschulter beabstandet ist. Dadurch kann eine Überbestimmung der Anschlagstellung des Düsenkopfs vermieden werden.

Auch hinsichtlich der Bauteilstabilität ist es günstig, wenn der Außendurchmesser des Futtermantels an der Futterschulter mindestens das 1,2-fache des Außendurchmessers des Gewindezapfens beträgt.

Zur Schaffung von Freiräumen für die spanende Bearbeitung bei der Futterherstellung ist es von Vorteil, wenn die Futterschulter eine zu einem Gewindefreistich für das Außengewinde des Gewindezapfens abfallende Schrägfläche bildet.

Um die Handhabung zu erleichtern und eine sichere Verbindung zu gewährleisten, sieht eine weitere vorteilhafte Ausgestaltung vor, dass der Düsenkopf an seiner in der Grundform zylindrischen Mantelfläche mit Ausnehmungen für den Eingriff eines Schraubenschlüssels versehen ist.

Um den Kühlschmierstoff gezielt zum Einsatz zu bringen, ist es von Vorteil, wenn die Düsenbohrungen in Durchströmrichtung gesehen schräg zu der Drehachse hin verlaufen und an ihren Austrittsöffnungen vom Rand der Durchstecköffnung radial beabstandet sind.

Vorteilhaft ist es auch, wenn die Kühlschmierstoffzuführung bei einem Schrumpffutter mit Kegelschnittstelle einen längs der Drehachse durch die Kegelschnittstelle verlaufendes Rohrstück besitzt.

Eine weitere Verbesserung auch zur Vermeidung von Toträumen für die Minimalmengenschmierung sieht vor, dass die Kühlschmierstoffzuführung eine in einen Strömungsquerschnitt eingesetzte, von dem Kühlschmierstoff in einem Mantelbereich umströmte Strömungsleitnadel aufweist.

Im Folgenden wird die Erfindung anhand der in der Zeichnung schematisch dargestellten Ausführungsbeispiele näher erläutert. Es zeigen:
- Fig. 1: einen Werkzeughalter mit einem Schrumpffutter und einem darauf aufgeschraubten Düsenkopf zur Durchleitung von Kühlschmierstoff in perspektivischer Ansicht,
- Fig. 2: den Werkzeughalter nach Fig. 1 im Axialschnitt;
- Fig. 3: den Düsenkopf in einer Stirnansicht;
- Fig. 4: den Düsenkopf im Axialschnitt entlang der Schnittlinie 4 - 4 der Fig. 3;
- Fig. 5 bis 8: eine für Minimalmengenschmierung geeignete Ausführungsform eines Werkzeughalters in Fig. 1 bis 4 entsprechenden Darstellungen.

Der in der Zeichnung gezeigte Werkzeughalter 10 besteht im Wesentlichen aus einem Schrumpffutter 12 zum Einspannen des Werkzeugschafts eines um eine Drehachse 14 drehenden, nicht gezeigten Rotationswerkzeugs, beispielsweise eines Bohrers oder Fräser, einer Kühlschmierstoffzuführung 16 zum Durchleiten von unter Druck stehendem, flüssigem und/oder gasförmigem Kühlschmierstoff und einem am vorderen Stirnende des Schrumpffutters 12 als einstückiges Bauteil aufgeschraubten Düsenkopf 18, welcher mit der Kühlschmierstoffzuführung 16 kommunizierende Düsenbohrungen 20 zum Beaufschlagen des vorderen Werkzeugendes mit Kühlschmierstoff insbesondere zum Kühlen, Schmieren und Freiräumen des Arbeitsbereichs aufweist.

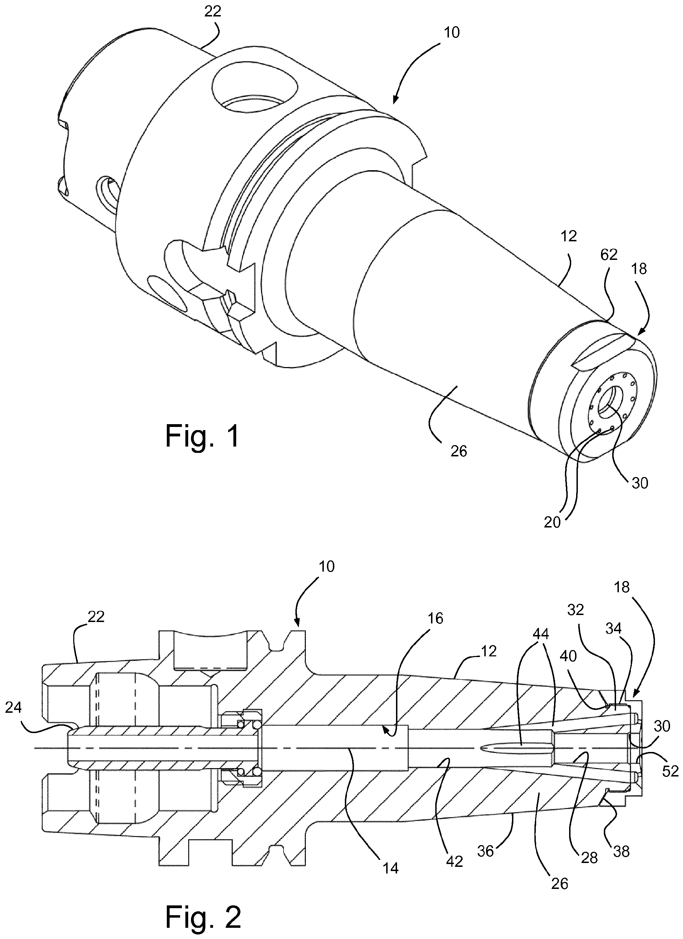

Wie am besten aus Fig. 1 und 2 ersichtlich, besitzt der Werkzeughalter 10 an seinem hinteren Abschnitt einen Hohlschaftkegel 22 zum Andocken an eine rotierende Maschinenspindel. Dessen Hohlraum dient zugleich zur maschinenseitigen Zuführung von Kühlschmierstoff über ein zentrales Anschlussrohr 24 der Kühlschmierstoffzuführung 16 (Fig. 2).

Das Schrumpffutter 12 umfasst einen Futterkörper 26 in Form einer Hülsenpartie mit einem zylindrisch hohlen Spannbereich 28, der über eine vordere Stirnöffnung 30 zum Einführen des Werkzeugschafts zugänglich ist. Der Spannbereich 28 besitzt einen etwas geringeren Nenndurchmesser als der Werkzeugschaft, so dass dieser in an sich bekannter Weise durch (induktives) Erwärmen des Schumpffutters 12 klemmend einspannbar ist. Im eingeschrumpften Zustand wird der Werkzeugschaft zur Übertragung eines Drehmoments auf den vorderen Arbeitsabschnitt des Rotationswerkzeugs reibschlüssig im Presssitz drehfest gehalten. Zum Ausschrumpfen wird ebenfalls nur der das Schumpffutter 12 einseitig erwärmt, bis die thermische Ausdehnung den Werkzeugschaft wieder zur Entnahme freigibt.

Bei diesen Rüstvorgängen verbleibt der Düsenkopf 18 am Futterkörper 26 fixiert. Zu diesem Zweck weist der Futterkörper 26 einen nach vorne abstehenden, die Stirnöffnung 30 umschließenden zylindrischen Gewindezapfen 32 auf, der mit einem Außengewinde 34 versehen ist. Weiterhin besitzt der Futterkörper 26 einen konisch nach vorne sich verjüngenden Futtermantel 36, der über eine als Schrägfläche ausgebildete Futterschulter 38 zu dem Gewindezapfen 32 hin abfällt, so dass in der stufenförmigen Außenkontur ein Freiraum für eine flächenbündige Aufnahme des Düsenkopfs 18 geschaffen wird. Um eine hinreichende Wandstärke zu gewähren, sollte der Außendurchmesser des Futtermantels 36 an der Kante zur Futterschulter 38 mindestens das 1,2-fache des Außendurchmessers des Gewindezapfens 32 betragen. Die Futterschulter 38 endet in einem Gewindefreistich 40 für das Außengewinde 34 in Form eines Radialeinstichs.

Die Kühlschmierstoffzuführung 16 führt das Druckmedium über das Anschlussrohr 24 zu stufenförmigen Axialbohrung 42 in dem Futterkörper 26 und von dort zu vier im 90°-Umfangsabstand voneinander schräg abzweigenden Speisebohrungen 44, die durch den Gewindezapfen 32 hindurch verlaufen und an dessen planer vorderer Stirnseite münden. Die Mündungsstellen befinden sich somit zwischen den inneren und äußeren Stirnkanten des Gewindezapfens 32.

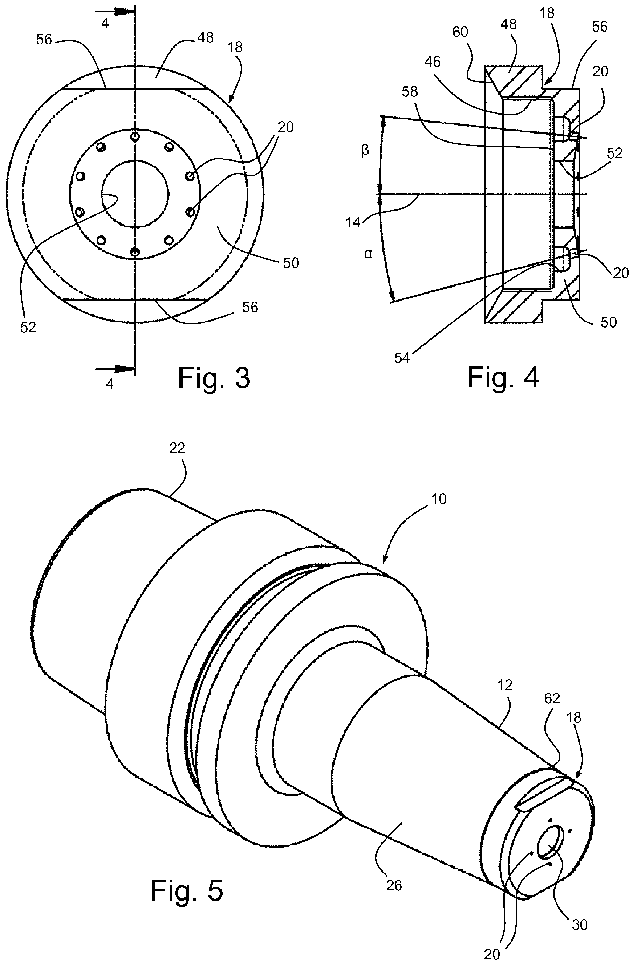

Wie am besten aus Fig. 3 und 4 zu ersehen, besitzt der Düsenkopf 18 einen über ein Innengewinde 46 auf das Außengewinde 34 des Gewindezapfens 32 aufschraubbaren Hülsenabschnitt 48 und einen mit den Düsenbohrungen 20 versehenen Ringabschnitt 50, der eine zentrale Durchstecköffnung 52 für den Werkzeugschaft begrenzt.

Die Düsenbohrungen 20 sind in Umfangsrichtung des Düsenrings 18 verteilt, wobei abwechselnd zwei Bohrungsausrichtungen mit unterschiedlichem Neigungswinkel α und β bezüglich der Drehachse vorgesehen sind. Die radial umlaufend begrenzten Mündungsöffnungen der Düsenbohrungen 20 befinden sich in einem radialen Abstand von der Durchstecköffnung 52 bzw. dem Werkzeugschaft, so dass das durchgeleitete Medium unter einem spitzen Winkel zu der Drehachse 14 gezielt in den Arbeitsbereich hinein ausgestoßen wird.

An seiner Innenseite weist der Ringabschnitt 50 eine nach hinten offene ringförmige Verteilerausnehmung 54 für Kühlschmierstoff auf, wobei die Einlassöffnungen der Düsenbohrungen 20 am Boden der Verteilerausnehmung 54 liegen. Damit ist im montierten Zustand ein ringförmiges Verteilen des über die futterseitigen Speisebohrungen 44 eingeleiteten Kühlschmierstoffs auf die Einlassöffnungen möglich.

Um eine Schraubbewegung des Düsenkopfs 18 zu erleichtern, ist der Ringabschnitt 50 mit zwei einander diametral gegenüberliegenden Segmentausnehmungen für den formschlüssigen Eingriff eines Schraubenschlüssels versehen.

Beim Anschrauben des Hülsenabschnitts 48 schlägt der Ringabschnitt 50 mit seiner hinteren Dichtfläche 58 gegen die freie Stirnseite des Gewindezapfens 32 an. Dabei wird zumindest die innere und äußere Stirnkante des Gewindezapfens 32 gegen Durchtritt von Kühlschmierstoff umlaufend abgedichtet. Im montierten Zustand verbleibt zwischen einer hinteren Schrägfläche 60 des Hülsenabschnitts 48 und der entsprechend abgeschrägten Futterschulter 38 ein schmaler Ringspalt 62 (Fig. 1), so dass bei weitgehend geschlossener Mantelkontur eine Überbestimmung der Endposition vermieden wird.

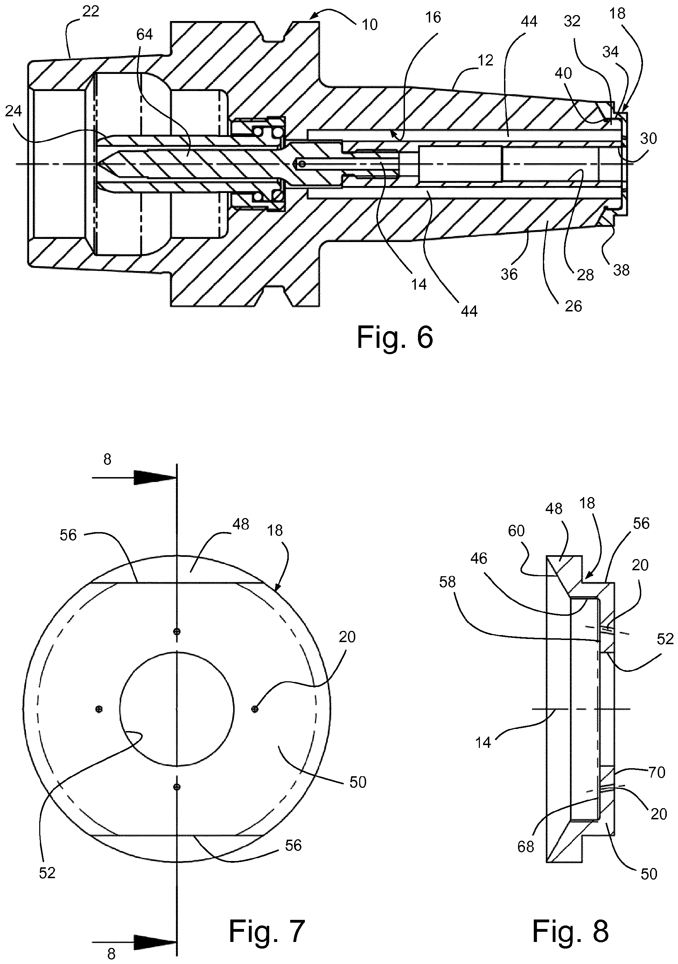

Bei dem in Fig. 5 bis 8 gezeigten Ausführungsbeispiel sind gleiche oder ähnliche Teile mit den gleichen Bezugszeichen wie vorstehen beschrieben versehen. Dieses Ausführungsbeispiel unterscheidet sich besonders dadurch, dass die Kühlschmierstoffzuführung 16 für eine Minimalmengen- bzw. Mindermengenschmierung ausgelegt ist. Dabei sollen Versackungsräume bzw. Taschen vermieden werden, in denen sich flüssiges Medium unter Einwirkung der Zentrifugalkraft ansammelt und von gasförmigem Medium trennt.

Zu diesem Zweck ist bereits in dem Anschlussrohr 24 eine Strömungsleitnadel 64 eingesetzt, die den Kühlschmierstoff in einem Mantelbereich radial führt und ausleitet. Die Weiterleitung erfolgt über vier Speisebohrungen 44, die parallel zur Drehachse 14 durch den gesamten Futterkörper 26 hindurch verlaufen. In dem Ringabschnitt 50 des Düsenkopfs 18 sind vier Düsenbohrungen 20 von einer zugleich als Dichtfläche 58 wirkenden hinteren Planfläche 68 schräg zu der freien vorderen Stirnseite 70 hin eingebracht. Auch hier sind die Düsenbohrungen 20 bzw. deren Mündungsöffnungen umlaufend begrenzt und durch einen inneren Materialsteg des Ringabschnitts 50 von der Durchstecköffnung 52 getrennt bzw. beabstandet. Im montierten Zustand müssen die Düsenbohrungen mit den Speisebohrungen 44 kommunizieren, so dass eine geeignete Drehstellung des Düsenkopfs 18 einzuhalten ist. Um dies zu erleichtern, können korrespondierende Markierungen an dem Futtermantel 36 und dem Hülsenabschnitt 48 angebracht sein.

## Patentansprüche

1. Werkzeughalter mit einem um eine Drehachse (14) rotierend antreibbaren Schrumpffutter (12), das einen zum Schrumpfspannen eines Werkzeugschafts eines Rotationswerkzeugs ausgebildeten, über eine vordere Stirnöffnung (30) zugänglichen hohlen Futterkörper (26) umfasst, einer durch den Futterkörper (26) hindurch verlaufenden Kühlschmierstoffzuführung (16), die zum Durchleiten von unter Druck stehendem Kühlschmierstoff eingerichtet ist, und einem am vorderen Abschnitt des Futterkörpers (26) angebrachten Düsenkopf (18), der als einstückiges Bauteil ausgebildet ist und mit der Kühlschmierstoffzuführung (16) kommunizierende, radial allseitig begrenzte Düsenbohrungen (20) zum Beaufschlagen des Rotationswerkzeugs mit Kühlschmierstoff aufweist, wobei der Futterkörper (26) einen die Stirnöffnung (30) umschließenden, mit einem Außengewinde (34) versehenen Gewindezapfen (32) und eine von dem Futtermantel (36) zu dem Gewindezapfen (32) hin abfallende Futterschulter (38) aufweist, und wobei der Düsenkopf (18) einen über ein Innengewinde (46) auf den Gewindezapfen (32) aufschraubbaren Hülsenabschnitt (48) und einen mit den Düsenbohrungen (20) versehenen, eine Durchstecköffnung (52) für den Werkzeugschaft begrenzenden Ringabschnitt (50) aufweist, wobei der Ringabschnitt (50) zumindest die innere und äußere Stirnkante des Gewindezapfens (32) gegen Durchtritt von Kühlschmierstoff umlaufend abdichtet.

2. Werkzeughalter nach Anspruch 1, **dadurch gekennzeichnet, dass** beim Anschrauben des Hülsenabschnitts (48) der Ringabschnitt (50) stirnseitig gegen den Gewindezapfen (32) anschlägt.

3. Werkzeughalter nach Anspruch 1 oder 2, **dadurch gekennzeichnet, dass** der Ringabschnitt (50) eine gegen die freie Stirnseite des Gewindezapfens (32) anliegende hintere Dichtfläche (58) aufweist.

4. Werkzeughalter nach einem der Ansprüche 1 bis 3, **dadurch gekennzeichnet, dass** der Ringabschnitt (50) eine hintere Planfläche (68) aufweist, die von den Einlassöffnungen der Düsenbohrungen (20) durchbrochen ist.

5. Werkzeughalter nach Anspruch 4, **dadurch gekennzeichnet, dass** die Kühlschmierstoffzuführung (16) mehrere durch den Gewindezapfen (32) hindurch verlaufende, in dessen Umfangsrichtung verteilte Speisebohrungen (44) aufweist, die jeweils im Bereich einer Einlassöffnungen einer Düsenbohrung (20) münden.

6. Werkzeughalter nach einem der Ansprüche 1 bis 3, **dadurch gekennzeichnet, dass** der Ringabschnitt (50) eine nach hinten offene ringförmige Verteilerausnehmung (54) für Kühlschmierstoff aufweist, wobei die Einlassöffnungen der Düsenbohrungen (20) am Boden der Verteilerausnehmung (54) liegen.

7. Werkzeughalter nach Anspruch 6, **dadurch gekennzeichnet, dass** die Kühlschmierstoffzuführung (16) mehrere durch den Gewindezapfen (32) hindurch verlaufende, in dessen Umfangsrichtung verteilte Speisebohrungen (44) aufweist, die im Bereich der Verteilerausnehmung (54) münden.

8. Werkzeughalter nach einem der Ansprüche 1 bis 7, **dadurch gekennzeichnet, dass** Mantelfläche des Hülsenabschnitts (48) flächenbündig an den vorzugsweise konisch verjüngtem Futtermantel (36) anschließt.

9. Werkzeughalter nach einem der Ansprüche 1 bis 8, **dadurch gekennzeichnet, dass** der Hülsenabschnitt (48) über einen im Vergleich zur Gewindelänge seines Innengewindes (46) schmalen Ringspalt (62) von der Futterschulter (38) beabstandet ist.

10. Werkzeughalter nach einem der Ansprüche 1 bis 9, **dadurch gekennzeichnet, dass** der Außendurchmesser des Futtermantels (36) an der Futterschulter (38) mindestens das 1,2-fache des Außendurchmessers des Gewindezapfens (32) beträgt.

11. Werkzeughalter nach einem der Ansprüche 1 bis 10, **dadurch gekennzeichnet, dass** die Futterschulter (38) eine zu einem Gewindefreistich (40) für das Außengewinde (34) des Gewindezapfens (32) abfallende Schrägfläche bildet.

12. Werkzeughalter nach einem der Ansprüche 1 bis 11, **dadurch gekennzeichnet, dass** der Düsenkopf (18) an seiner in der Grundform zylindrischen Mantelfläche mit Ausnehmungen (56) für den Eingriff eines Schraubenschlüssels versehen ist.

13. Werkzeughalter nach einem der Ansprüche 1 bis 12, **dadurch gekennzeichnet, dass** die Düsenbohrungen (20) in Durchströmrichtung gesehen schräg zu der Drehachse (14) hin verlaufen und an ihren Austrittsöffnungen vom Rand der Durchstecköffnung (52) radial beabstandet sind.

14. Werkzeughalter nach einem der Ansprüche 1 bis 13, **dadurch gekennzeichnet, dass** das Schrumpffutter (12) einen Kegelschnittstelle (22), insbesondere einen Hohlschaftkegel zum Andocken an eine rotierende Maschinenspindel aufweist, und dass die Kühlschmierstoffzuführung (16) einen längs der Drehachse (14) durch die Kegelschnittstelle (22) verlaufendes Rohrstück besitzt.

15. Werkzeughalter nach einem der Ansprüche 1 bis 14, **dadurch gekennzeichnet, dass** die Kühlschmierstoffzuführung (16) eine in einen Strömungsquerschnitt eingesetzte, von dem Kühlschmierstoff in einem Mantelbereich umströmte Strömungsleitnadel (64) aufweist.

## Claims

1. Tool holder comprising a shrink-fit chuck (12) which can be rotatably driven about an axis of rotation (14) and has a hollow chuck body (26) which is designed for shrink-fit clamping a tool shank of a rotary tool and is accessible via a front end opening (30), comprising a cooling lubricant feed (16) which extends through the chuck body (26) and is designed to conduct pressurized cooling lubricant, and comprising a nozzle head (18) which is attached to the front portion of the chuck body (26), is formed as a single-piece component and comprises nozzle bores (20) for applying cooling lubricant to the rotary tool, which bores communicate with the cooling lubricant feed (16) and are radially delimited on all sides, wherein the chuck body (26) comprises a threaded stem (32) which surrounds the end opening (30) and is provided with an external thread (34), and a chuck shoulder (38) which slopes down from the chuck casing (36) to the threaded stem (32), and wherein the nozzle head (18) comprises a sleeve portion (48) which can be screwed onto the threaded stem (32) by means of an interior thread (46), and an annular portion (50) which is provided with the nozzle bores (20) and defines an insertion opening (52) for the tool shank, wherein the annular portion (50) circumferentially seals at least the inner and outer end edge of the threaded stem (32) against the passage of cooling lubricant.

2. Tool holder according to claim 1, **characterized in that**, when the sleeve portion (48) is being screwed on, the end face of the annular portion (50) strikes against the threaded stem (32).

3. Tool holder according to either claim 1 or claim 2, **characterized in that** the annular portion (50) comprises a rear sealing surface (58) which abuts against the free end face of the threaded stem (32).

4. Tool holder according to any of claims 1 to 3, **characterized in that** the annular portion (50) comprises a rear planar surface (68) which is pierced by the inlet openings of the nozzle bores (20).

5. Tool holder according to claim 4, **characterized in that** the cooling lubricant feed (16) comprises a plurality of supply bores (44) which extend through the threaded stem (32), are distributed in the circumferential direction of said stem, and each open in the region of an inlet opening of a nozzle bore (20).

6. Tool holder according to any of claims 1 to 3, **characterized in that** the annular portion (50) comprises an annular distribution recess (54) for cooling lubricant that is open to the rear, the inlet openings of the nozzle bores (20) being at the bottom of the distribution recess (54).

7. Tool holder according to claim 6, **characterized in that** the cooling lubricant feed (16) comprises a plurality of supply bores (44) which extend through the threaded stem (32), are distributed in the circumferential direction of said stem, and open in the region of the distribution recess (54).

8. Tool holder according to any of claims 1 to 7, **characterized in that** the lateral surface of the sleeve portion (48) connects flush to the preferably conically tapered chuck casing (36).

9. Tool holder according to any of claims 1 to 8, **characterized in that** the sleeve portion (48) is spaced apart from the chuck shoulder (38) over an annular gap (62) which is narrow in comparison with the thread length of the internal thread (46) of said sleeve portion.

10. Tool holder according to any of claims 1 to 9, **characterized in that** the outer diameter of the chuck casing (36) on the chuck shoulder (38) is at least 1.2 times the outer diameter of the threaded stem (32).

11. Tool holder according to any of claims 1 to 10, **characterized in that** the chuck shoulder (38) forms an inclined surface which slopes down to a thread undercut (40) for the external thread (34) of the threaded stem (32).

12. Tool holder according to any of claims 1 to 11, **characterized in that** the nozzle head (18) is provided with recesses (56) on the lateral surface thereof, the basic shape of which is cylindrical, for the engagement of a wrench.

13. Tool holder according to any of claims 1 to 12, **characterized in that** the nozzle bores (20), seen in the flow direction, extend obliquely to the axis of rotation (14) and are radially spaced apart from the edge of the insertion opening (52) at the outlet openings of said bores.

14. Tool holder according to any of claims 1 to 13, **characterized in that** the shrink-fit chuck (12) comprises a taper interface (22), in particular a hollow shank taper, for docking onto a rotating machine spindle, and **in that** the cooling lubricant feed (16) has a tube piece which extends along the axis of rotation (14) through the taper interface (22).

15. Tool holder according to any of claims 1 to 14, **characterized in that** the cooling lubricant feed (16) comprises a flow guide needle (64) which is inserted into a flow cross-section and around which the cooling lubricant in a casing region flows.

## Revendications

1. Porte-outil comportant un mandrin rétractable (12) qui peut être entraîné en rotation autour d'un axe de rotation (14) et qui comprend un corps de mandrin creux (26), qui est conçu pour exercer une contrainte de retrait sur une tige d'outil d'un outil rotatif, et qui est accessible par une ouverture frontale (30), une alimentation en lubrifiant de refroidissement (16) qui traverse le corps de mandrin (26), ladite alimentation étant conçue pour le passage de lubrifiant de refroidissement sous pression, et une tête de buse (18) qui est fixée à la partie avant du corps de mandrin (26), ladite tête de buse étant réalisée en une seule pièce et présente des perçages de buse (20) qui communiquent avec l'alimentation en lubrifiant de refroidissement (16) et sont limités radialement sur tous les côtés, pour appliquer le lubrifiant de refroidissement sur l'outil rotatif,
le corps de mandrin (26) comportant un tourillon fileté (32) qui entoure l'ouverture frontale (30) et est pourvu d'un filetage extérieur (34), et un épaulement de mandrin (38) descendant de la coque de mandrin (36) vers le tourillon fileté (32), et
la tête de buse (18) comportant une partie de manchon (48) qui peut être vissée par un filetage intérieur (46) sur le tourillon fileté (32), et une partie annulaire (50) qui est pourvue des perçages de buse (20) et délimite une ouverture de passage (52) pour la tige d'outil, la partie annulaire (50) étanchéifiant au moins les bords frontaux intérieur et extérieur du tourillon fileté (32) contre le passage du lubrifiant de refroidissement d'une manière circonférentielle.

2. Porte-outil selon la revendication 1, **caractérisé en ce que** lors du vissage de la partie de manchon (48), la partie annulaire (50) vient frontalement en butée contre le tourillon fileté (32).

3. Porte-outil selon la revendication 1 ou 2, **caractérisé en ce que** la partie annulaire (50) présente une surface d'étanchéité arrière (58) qui s'applique contre la face frontale libre du tourillon fileté (32).

4. Porte-outil selon l'une des revendications 1 à 3, **caractérisé en ce que** la partie annulaire (50) présente une face plane (68) arrière percée par les ouvertures d'entrée des perçages de buse (20).

5. Porte-outil selon la revendication 4, **caractérisé en ce que** l'alimentation en lubrifiant de refroidissement (16) présente plusieurs alésages d'alimentation (44) qui traversent le tourillon fileté (32), sont répartis dans la direction périphérique du tourillon fileté et s'ouvrent chacun dans la zone d'une ouverture d'entrée d'un perçage de buse (20).

6. Porte-outil selon l'une des revendications 1 à 3, **caractérisé en ce que** la partie annulaire (50) présente un évidement de distribution annulaire (54) ouvert vers l'arrière pour le lubrifiant de refroidissement, les ouvertures d'entrée des perçages de buse (20) étant situées au fond de l'évidement de distribution (54).

7. Porte-outil selon la revendication 6, **caractérisé en ce que** l'alimentation en lubrifiant de refroidissement (16) présente plusieurs alésages d'alimentation (44) qui traversent le tourillon fileté (32), sont répartis dans la direction périphérique du tourillon fileté et s'ouvrent dans la zone de l'évidement de distribution (54).

8. Porte-outil selon l'une des revendications 1 à 7, **caractérisé en ce que** la surface latérale de la partie de manchon (48) est affleurante à la coque de mandrin (36) de préférence à rétrécissement conique.

9. Porte-outil selon l'une des revendications 1 à 8, **caractérisé en ce que** la partie de manchon (48) est espacée de l'épaulement de mandrin (38) par un espace annulaire (62) étroit par rapport à la longueur de filetage de son filetage intérieur (46).

10. Porte-outil selon l'une des revendications 1 à 9, **caractérisé en ce que** le diamètre extérieur de la coque de mandrin (36) sur l'épaulement (38) est au moins 1,2 fois le diamètre extérieur du tourillon fileté (32).

11. Porte-outil selon l'une des revendications 1 à 10, **caractérisé en ce que** l'épaulement de mandrin (38) forme une surface inclinée et inclinée vers le bas jusqu'à un dégagement par gorge (40) pour le filetage extérieur (34) du tourillon fileté (32).

12. Porte-outil selon l'une des revendications 1 à 11, **caractérisé en ce que** la tête de buse (18) est munie, sur sa surface latérale cylindrique dans la forme de base, d'évidements (56) pour l'engagement d'une clé.

13. Porte-outil selon l'une des revendications 1 à 12, **caractérisé en ce que** les perçages de buse (20), vus dans la direction de passage, s'étendent obliquement vers l'axe de rotation (14) et sont espacés radialement du bord de l'ouverture de passage (52) à leurs ouvertures de sortie.

14. Porte-outil selon l'une des revendications 1 à 13, **caractérisé en ce que** le mandrin rétractable (12) présente une interface conique (22), en particulier un cône à tige creuse, pour l'accrochage à une broche de machine rotative, et **en ce que** l'alimentation en lubrifiant de refroidissement (16) présente un tronçon de tube qui traverse l'interface conique (22) selon l'axe de rotation (14).

15. Porte-outil selon l'une des revendications 1 à 14, **caractérisé en ce que** l'alimentation en lubrifiant de refroidissement (16) présente une aiguille de guidage d'écoulement (64) insérée dans une section d'écoulement et entourée par le lubrifiant de refroidissement dans une zone d'enveloppe.
